# EUROPEAN PATENT APPLICATION

(11) **EP 4 563 259 A1**
(43) Date of publication of application: **04.06.2025**
(21) Application number: 23874513.7
(22) Date of filing: 02.08.2023
(51) Int. Cl.: B21D 22/00

(54) **METHOD FOR IDENTIFYING PORTION CAUSING INCREASE IN FORMING LOAD, METHOD FOR MANUFACTURING PRESS FORMED PART, DEVICE FOR IDENTIFYING PORTION CAUSING INCREASE IN FORMING LOAD, AND PROGRAM FOR IDENTIFYING PORTION CAUSING INCREASE IN FORMING LOAD**

(30) Priority: 05.10.2022 JP 2022160639
(71) Applicant: JFE Steel Corporation, Tokyo 100-0011 (JP)
(72) Inventor: OGIHARA, Yuki, Tokyo 100-0011 (JP); KISHIGAMI, Yasuhiro, Tokyo 100-0011 (JP)
(74) Representative: Grünecker Patent- und Rechtsanwälte PartG mbB
(86) International application number: PCT/JP2023/028255
(87) International publication number: WO 2024/075380

(57) **Abstract**

A forming load increasing factor portion identifying method according to the present invention includes step S1 of setting evaluation regions in a press-forming die model 15, step S3 of calculating a forming load distribution of the press-forming die model 15, step S5 of calculating a load evaluation value for each evaluation region, step S7 of changing a deformation resistance of one evaluation region in the press-forming die model and calculating a load evaluation value of the evaluation region in which the deformation resistance is changed, and step S9 of identifying the evaluation region in which the load evaluation value changes before and after the deformation resistance of the press-forming die model is changed and identifying a portion of the press formed part 1 corresponding to the identified evaluation region as a portion that causes an increase in forming load.

## Description

### Field

The present invention relates to a forming load increasing factor portion identifying method, device, and program for identifying a portion of a press formed part that causes an increase in forming load. The present invention also relates to a method for manufacturing a press formed part, the method including: identifying a site of the press formed part that causes an increase in forming load; and reducing the forming load associated with press forming.

### Background

With growing needs improvement of fuel efficiency and improvement of collision safety due to weight reduction of automobiles, the application of a high-tensile steel sheet in an automotive body is expanding. The application of a high-tensile steel sheet has been hindered by issues such as reduced formability due to its low ductility and poor dimensional accuracy due to its high material strength. On the other hand, an increase in a forming load required for forming a part is also a major problem, and it is necessary to change a press line or divide a part, which is an obstacle to application of a high-tensile steel sheet. Therefore, a measure for reducing the forming load associated with the press forming is required.

The forming load required for press forming can be predicted in advance using computer aided engineering analysis (CAE analysis). CAE analysis has been conventionally used to predict in advance defects of press forming and appearance defects due to fractures, wrinkles, springback, and the like generated at the time of forming a part when the profile of the part or a press-forming die is examined, and a forming load required for press forming can also be calculated using this CAE analysis. When a large forming load is predicted, the forming load is reduced by changing the profile of the part or the press-forming die, or examining a stamping process.

For example, since a forming load required for press forming varies depending on whether trimming of a part is performed simultaneously with forming or before and after forming, a timing of trimming (cutting) the part has been examined at a press site so that the forming load does not exceed the capability of a press machine.

In addition, Patent Literature 1 discloses a method for reducing a forming load by performing incremental forming by divisionally moving a press-forming die.

Furthermore, Non Patent Literature 1 discloses a technique of predicting a forming load using a press-forming die model as an elastic body. Non Patent Literature 1 proposes a method of designing a pressing process by examining an influence exerted by a slide part of a press machine or a gap of a mold part, and a method of evaluating a die contact state of a press-forming die on the basis of a contact pressure distribution (see FIG. 9 of Non Patent Literature 1) calculated by CAE analysis and determining a gap, a poor contact, or the like of the press-forming die.

### Citation List

### Patent Literature

Patent Literature 1: JP 2010-207907 A
   Non Patent Literature
Non Patent Literature 1: Shoichiro Ohmachi, "Load Examination of Press Forming CAE Using 3DSimSTAMP and Application Thereof", Press Technology, THE NIKKAN KOGYO SHIMBUN, LTD., March 2015, Vol. 53, No. 3, P62-65

### Summary

### Technical Problem

One of the factors that increase the forming load is no conformity between the blank and the press-forming die (not conform to the die) during forming. The conformability between the blank and the press-forming die during forming refers to how much the blank deforms along the surface profile of the press-forming die before reaching the forming bottom dead center. In a case where a part of the blank does not conform to the press-forming die during forming, that is, the forming end is reached in a state where the portion is hardly deformed into a profile conforming to the surface profile of the press-forming die, the forming load rapidly increases when the upper and lower press-forming dies form the target profile with the portion interposed therebetween at the forming bottom dead center.

In addition, other factors that increase the forming load include buckling and wrinkle generated during forming. When buckling or wrinkle occurs during forming, the apparent sheet thickness of the portion increases, so that the blank and the press-forming die do not uniformly contact each other. Therefore, when the upper and lower press-forming dies sandwich the blank at the forming bottom dead center, the wrinkles are crushed, so that the forming load increases.

Since the above two phenomena of increasing the forming load are greatly affected by the profile of the part, it is effective to correct the part profile and take measures when the forming load increases due to these factors.

On the other hand, in the method of Patent Literature **1,** it is necessary to identify a portion that causes an increase in forming load during press forming at the stage of press-forming die design, that is, a portion where the blank does not conform to the press-forming die during forming, or a portion where buckling or wrinkle is predicted, examine a part profile, and reflect the part profile in the profile of the press-forming die. However, conventionally, in a case where a large forming load is predicted, there is no method of clearly identifying a site that is a factor of the large forming load, and thus, the part profile has been corrected on the basis of experience of a designer. Then, it is necessary to create a press-forming die model corresponding to the corrected part profile, perform CAE analysis, and check the presence or absence of an effect by the correction. In addition, as a result of the analysis, in a case where the effect of reducing the forming load cannot be obtained, it is necessary to repeat the correction of the part profile, the creation of the press-forming die model, and the analysis described above, and a large trouble due to a trial and error occurs.

In this regard, as described in Non Patent Literature **1,** there is also a method of identifying a site having a large contact pressure as a cause portion (forming load increasing factor portion) of forming load increase based on a contact pressure distribution calculated by CAE analysis. However, the portion having a large contact pressure is not necessarily a portion where the blank does not comfort to the press-forming die during forming. For example, the contact pressure may increase due to interference between press-forming dies, rigidity (stiffness) of the press-forming die and the press machine, or the like. Therefore, even if the profile of the part where the contact pressure increases is corrected for these reasons, the effect of reducing the forming load may not be obtained. Therefore, in the case of identifying the forming load increasing factor portion based on the contact pressure distribution, it is necessary to isolate the cause of the increase in the contact pressure, and in the case where there are many sites having a large contact pressure, it takes a lot of time to identify the load increasing factor portion.

The present invention has been made to solve the above problems, and an object of the present invention is to provide a forming load increasing factor portion identifying method, device, and program capable of easily identifying a portion of a press formed part that causes an increase in forming load. Another object of the present invention is to provide a method for manufacturing a press formed part capable of manufacturing a press formed part by reducing a forming load by using the method for identifying a portion causing an increase in forming load.

### Solution to Problem

### <Circumstances Leading to Present Invention>

In order to solve the above problems, the inventors have intensively studied a phenomenon in which forming load increases. As described above, when there is a portion where the blank does not conform to the surface profile of the press-forming die on the way to the forming bottom dead center, the forming load at the end of forming (immediately before the forming bottom dead center) rapidly increases. Such a phenomenon that the blank does not conform to the surface profile of the press-forming die easily occurs in a portion of a punch shoulder part of a punch or a portion having a convex (or concave) profile portion in the part profile.

Therefore, the inventors have more specifically studied a phenomenon occurring near the forming bottom dead center in forming of a press formed part having a convex profile portion. In actual press forming, near the forming bottom dead center, a large contact pressure acts on the surfaces of the punch and the die by contact with the blank, and the surfaces of the punch and the die are slightly elastically deformed and flattened (crushed).

When the press-forming die side is elastically deformed, the profile difference between the press-forming die profile and the blank profile is reduced, so that the blank easily fits to the press-forming die. However, with respect to the convex portion, even if the press-forming die side is slightly elastically deformed, the profile difference between the blank profile and the press-forming die profile remains large. Therefore, it is necessary to press the punch into the die and conform the blank to the press-forming die with a pressing force (deform the blank along the press-forming die profile), so that the load increases. This is one of the factors that increase the forming load when a press formed part having a convex profile portion is formed.

The reason why the forming load increases due to the forming of the convex profile portion is as described above, but the load increase amount at that time is affected by the degree of ease of elastic deformation of the press-forming die. For example, when the press-forming die is hardly elastically deformed, the press-forming die is hardly conformed to the blank, and the profile difference between the blank profile and the mold profile is not reduced. Therefore, it is necessary to forcibly deform the blank by increasing the forming load, and the forming load is likely to increase. On the other hand, when the press-forming die is easily elastically deformed, the press-forming die easily conforms to the blank, and the profile difference between the blank profile and the press-forming die profile is reduced, so that the forming load is less likely to increase.

As described above, the degree of ease of elastic deformation (deformation resistance) of the press-forming die affects the forming load. In a portion where the blank is difficult to conform to the press-forming die during forming, that is, a portion where the profile difference between the profile of the blank and the profile of the press-forming die during forming is large, the influence of the deformation resistance of the press-forming die increases. On the other hand, the influence of the deformation resistance of the press-forming die decreases at a portion where the blank easily conforms to the press-forming die during forming. In the portion where the blank conforms to the press-forming die even if the press-forming die is not elastically deformed before reaching the forming bottom dead center, the degree of conformity between the blank and the press-forming die does not change even if the press-forming die is elastically deformed, and thus there is no influence on the increase amount of the forming load.

In addition, even in a case where the apparent sheet thickness increases due to wrinkles generated during forming and the forming load increases, when the deformation resistance of the press-forming die is lowered, the forming load is less likely to increase. When the deformation resistance of the press-forming die is low, the press-forming die is elastically deformed according to a local load increase when the wrinkles are crushed, the gap between the press-forming dies sandwiching the blank is locally opened, and the phenomenon in which the forming load greatly increases before reaching the forming bottom dead center is alleviated. Therefore, the degree of ease of elastic deformation of the press-forming die, that is, the deformation resistance of the press-forming die also affects the amount of increase in the forming load for the wrinkle generation portion as described above. On the other hand, since the apparent sheet thickness does not increase at a portion where no wrinkles are generated, the elastic deformation of the press-forming die does not greatly affect the forming load.

From the above, the inventors have found that the degree of ease of deformation of the surface of the press-forming die affects the increase in the forming load only at a portion that causes the increase in forming load in the press formed part. Then, the inventors have reached an idea that it is possible to evaluate whether or not the portion is a portion that causes an increase in forming load by changing the deformation resistance only in a part of the press-forming die model in the CAE analysis and observing the change in the forming load before and after the change in the deformation resistance.

The present invention has been made based on such an idea, and specifically includes the following configurations.

A forming load increasing factor portion identifying method according to the present invention identifies a portion of a press formed part which causes an increase in forming load by executing each step by a computer and includes: a setting step of setting at least two or more evaluation regions in a press-forming die model in which an upper die and/or a lower die is formed of an integrated part and a die for press-forming the press formed part is modeled; a press forming analysis step of performing finite-element analysis of press forming of the press formed part using the press-forming die model and calculating a forming load distribution of the press-forming die model at a forming bottom dead center; a first calculation step of calculating a load evaluation value for each evaluation region of the press-forming die model based on the forming load distribution calculated in the press forming analysis step; a second calculation step of performing the finite-element analysis of press forming of the press formed part using a deformation resistance changed press-forming die model in which a deformation resistance in one evaluation region among the evaluation regions of the press-forming die model is changed to be low or high, calculating a forming load distribution of the deformation resistance changed press-forming die model at the forming bottom dead center, and calculating a load evaluation value of the evaluation region in which the deformation resistance is changed based on the forming load distribution; and an identification step of identifying the evaluation region in which the load evaluation value changes before and after the deformation resistance of the press-forming die model is changed based on the load evaluation value calculated in the first calculation step and the load evaluation value calculated in the second calculation step, and identifying a portion of the press formed part corresponding to the identified evaluation region as a portion of the press formed part that causes an increase in forming load.

The deformation resistance of the press-forming die model changed in the second calculation step may be any one of displacement restraint, Young's modulus, sheet thickness, density, mass, and yield strength, or a combination of two or more selected from these.

The load evaluation value for each evaluation region of the press-forming die model may be a load, a maximum load, or an average load for each evaluation region.

A method for manufacturing a press formed part according to the present invention includes: an identification step of identifying a portion of the press formed part that causes an increase in forming load using the forming load increasing factor portion identifying method according to the present invention; a profile correction step of correcting a profile of the press formed part of the identified portion and a profile of the corresponding press-forming die model; a determination step of repeating the identification step and the profile correction step until a change in a load evaluation value before and after a change in deformation resistance of a press-forming die model in an evaluation region of the press-forming die model falls within a predetermined range, and determining a profile of the press formed part and a profile of a corresponding press-forming die model; and a press forming step of producing a press-forming die based on the determined profile of the press-forming die model, and performing press forming of the press formed part using the produced press-forming die.

A forming load increasing factor portion identifying device according to the present invention identifies a portion of a press formed part which causes an increase in forming load and includes: a setting unit configured to set at least two or more evaluation regions in a press-forming die model in which an upper die and/or a lower die is formed of an integrated part and a die for press-forming the press formed part is modeled; a press forming analysis unit configured to perform finite-element analysis of press forming of the press formed part using the press-forming die model and calculate a forming load distribution of the press-forming die model at the forming bottom dead center; a first calculation unit configured to calculate a load evaluation value for each evaluation region of the press-forming die model based on the forming load distribution calculated in the press forming analysis unit; a second calculation unit configured to perform the finite-element analysis of press forming of the press formed part using a deformation resistance changed press-forming die model in which a deformation resistance in one evaluation region among the evaluation regions of the press-forming die model is changed to be low or high, calculate a forming load distribution of the deformation resistance changed press-forming die model at the forming bottom dead center, and calculate a load evaluation value of the evaluation region in which the deformation resistance is changed based on the forming load distribution; and an identification unit configured to identify the evaluation region in which the load evaluation value changes before and after the deformation resistance of the press-forming die model is changed based on the load evaluation value calculated in the first calculation unit and the load evaluation value calculated in the second calculation unit, and identify a portion of the press formed part corresponding to the identified evaluation region as a portion of the press formed part that causes an increase in forming load.

A forming load increasing factor portion identifying program according to the present invention causes a computer to function as the forming load increasing factor portion identifying device according to the present invention.

### Advantageous Effects of Invention

According to the present invention, it is possible to identify a portion that causes an increase in forming load by a simple method of changing a setting condition regarding deformation resistance of a press-forming die model in finite element method (FEM) analysis. Since the computer-aided design data (CAD data) of the part profile is not corrected or the profile of the press-forming die model is not corrected as in the related art, the time required for designing the part profile and the press-forming die profile can be significantly shortened.

### Brief Description of Drawings

[FIG. 1] FIG. 1 is a flowchart illustrating a flow of a forming load increasing factor portion identifying method according to a first embodiment.
[FIG. 2] FIG. 2 is an external view of a part targeted in the first embodiment.
[FIG. 3] FIG. 3 is a cross-sectional view of the part illustrated in FIG. 2, FIG. 3(a) is a cross-sectional view taken along line A-A of FIG. 2, and FIG. 3(b) is a cross-sectional view taken along line B-B of FIG. 2.
[FIG. 4] FIG. 4 is a diagram illustrating an evaluation region set in a press-forming die model in the first embodiment.
[FIG. 5] FIG. 5 is a graph illustrating comparison of load evaluation values before and after a change in a case where deformation resistance of a press-forming die model is changed for each evaluation region illustrated in FIG. 4.
[FIG. 6] FIG. 6 is a graph illustrating a rate of change in load before and after a change in deformation resistance of the press-forming die model illustrated in FIG. 5 (entire evaluation region).
[FIG. 7] FIG. 7 is a graph extracting only evaluation regions G and M in FIG. 6.
[FIG. 8] FIG. 8 is a graph illustrating a rate of change in load before and after a change in deformation resistance of a press-forming die model in another aspect of the first embodiment (entire evaluation region).
[FIG. 9] FIG. 9 is a flowchart illustrating a flow of a method for manufacturing a press formed part according to a second embodiment.
[FIG. 10] FIG. 10 is a block diagram illustrating a configuration of a forming load increasing factor portion identifying device according to a third embodiment.
[FIG. 11] FIG. 11 is a contact pressure distribution diagram used in a forming load increasing factor portion identifying method of a conventional example.

### Description of Embodiments

### [First Embodiment]

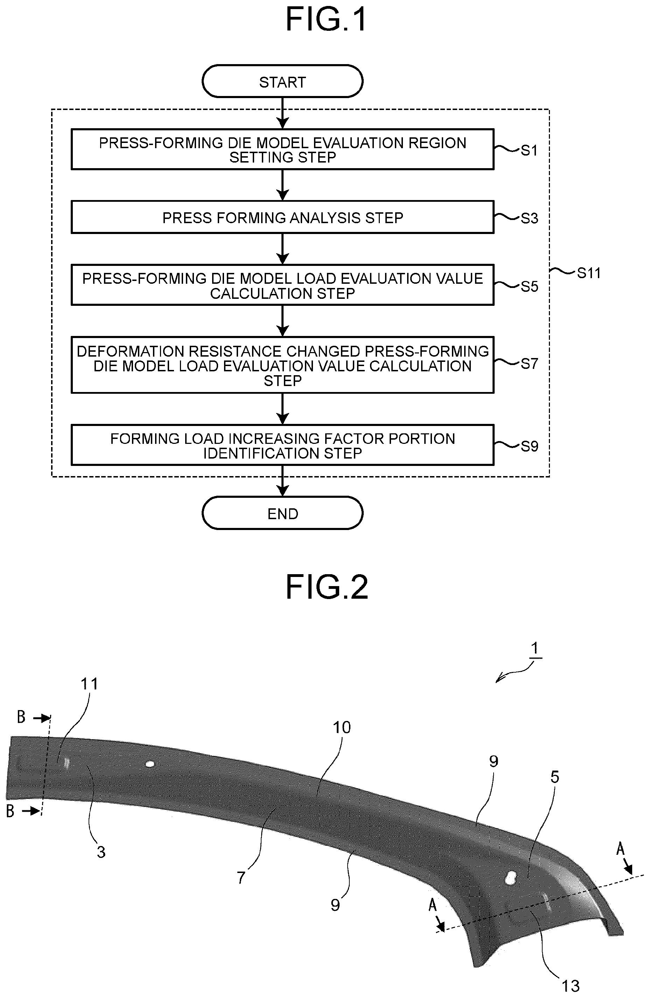

The forming load increasing factor portion identifying method according to a first embodiment identifies a portion of the press formed part that causes an increase in forming load. An example of a part targeted by the present embodiment is illustrated in FIG. 2.

The press formed part 1 of FIG. 2 is an example of a part simulating a front pillar of an automotive part, and has a substantially J profile entirely curved in the longitudinal direction in plan view. The press formed part 1 has a first top portion 3 having a planar shape and a second top portion 5 formed of a flat surface and an inclined surface on an upper surface of a region of about 1/3 from both ends in the longitudinal direction. In addition, a side wall portion 7 is formed on both sides of the first top portion 3 and the second top portion 5 via a shoulder R portion, a flange portion 9 is formed on the side wall portion 7 via a shoulder R portion, and the region has a hat-shaped cross section.

An upper surface portion 10 connecting the first top portion 3 and the second top portion 5 has a mountain profile that gradually protrudes toward the center, and side wall portions 7 continuous from the first top portion 3 and the second top portion 5 are formed on both sides thereof. In addition, the flange portion 9 is formed at the lower end of the side wall portion 7 over the entire length thereof.

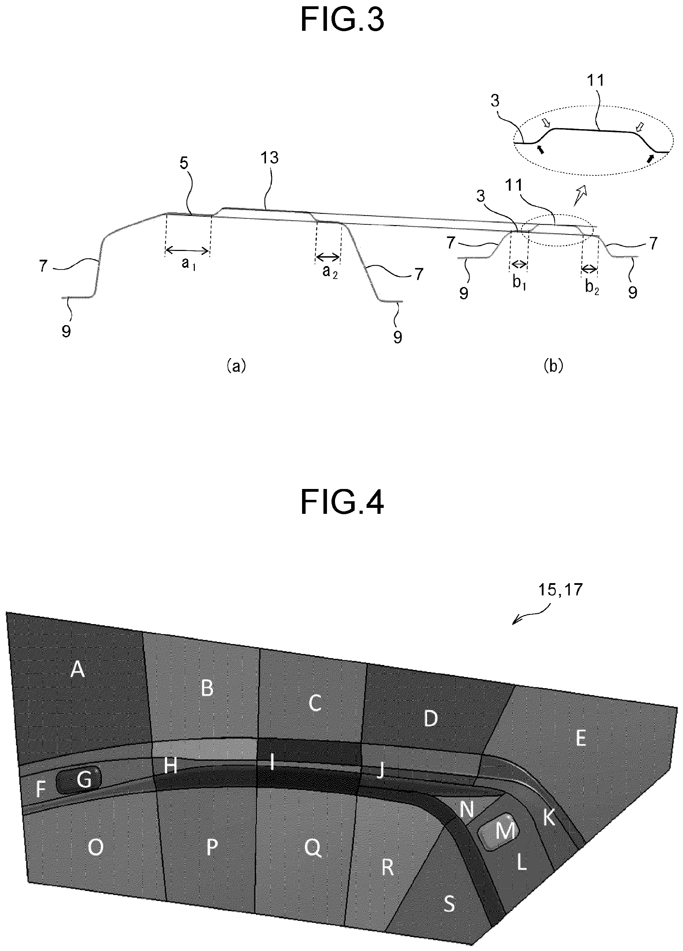

A first convex portion 11 projecting in a convex shape is formed on the first top portion 3. Similarly, a second convex portion 13 projecting in a convex shape is formed on the planar portion of the second top portion 5. FIG. 3(a) illustrates a cross-sectional profile taken along line A-A in FIG. 2, and FIG. 3(b) illustrates a cross-sectional profile taken along line B-B in FIG. 2. The protrusion heights of the first convex portion 11 and the second convex portion 13 are substantially equal as illustrated in FIG. 3.

In the case of the press formed part 1 as illustrated in FIG. 2, there is a concern about an increase in forming load due to the fact that it is difficult for the blank during forming and the press-forming die to conform to each other in the convex profile portions such as the first convex portion 11 and the second convex portion 13 (not conforming to the die). In this case, the profile of the portion can be corrected to reduce the forming load. In the method in the related art, it has been necessary to attempt whether or not the forming load can be reduced by correcting the profiles of many parts in which no conformity to the die and generation of wrinkles are concerned. As a result, it was necessary to repeat the correction of the part profile CAD data and the creation of the press-forming die model for finite element method (FEM) analysis a plurality of times, which was a time-consuming process.

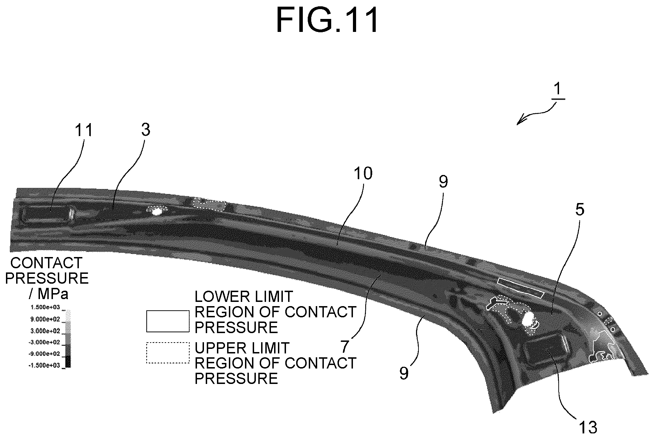

In addition, in the conventional method, the forming load increasing factor portion (portion where reduction of the forming load can be expected by profile correction) is estimated based on the contact pressure distribution, but the forming load increasing factor portion cannot be easily identified from the contact pressure distribution. The reason will be described based on the contact pressure distribution of FIG. 11.

The contact pressure distribution in FIG. 11 represents the magnitude of the contact pressure at the forming bottom dead center when the press formed part 1 is formed by color shading. The value of the contact pressure indicates that + (plus) is the contact pressure acting in the tensile direction, and - (minus) is the contact pressure acting in the compression direction. In addition, a portion having a large contact pressure in the tensile direction is indicated in a light color, and a portion having a large contact pressure in the compression direction is indicated in a dark color.

In FIG. 11, a region where the contact pressure in the compression direction (sign minus) is the largest (lower limit region of the contact pressure) is indicated by a white solid line, and a region where the contact pressure in the tensile direction (sign plus) is the largest (upper limit region of the contact pressure) is indicated by a white broken line. Looking at the contact pressure distribution of the first convex portion 11 and the second convex portion 13 in which there is a concern of not conforming to the die during forming, as illustrated in FIG. 11, since the upper surface portion of the first convex portion 11 and the second convex portion 13 and the peripheral portion of the boundary between the first top portion 3 and the second top portion 5 are displayed in a dark color, it can be seen that a large compressive stress acts. However, stress larger than stress generated in the first convex portion 11 and the second convex portion 13 is scattered in other portions such as the side wall portion 7 and the flange portion 9, and it is not possible to determine which profile of the first convex portion 11 or the second convex portion 13 should be corrected in order to reduce the press forming load.

On the other hand, the forming load increasing factor portion identifying method according to the present embodiment enables to identify which portion of the press formed part 1 in FIG. 2 is a cause that increases the forming load by a simple method without requiring correction of the part profile CAD data or the press-forming die model. Hereinafter, a specific description will be given.

As illustrated in FIG. 1, the forming load increasing factor portion identifying method of the present embodiment includes a press-forming die model evaluation region setting step S1 to a forming load increasing factor portion identification step S9. Each process of the press-forming die model evaluation region setting step S1 to the forming load increasing factor portion identification step S9 is executed by a computer.

### <Press-Forming Die Model Evaluation Region Setting Step>

The press-forming die model evaluation region setting step (hereinafter, abbreviated as setting step) S1 is a step of setting at least two evaluation regions in a press-forming die model obtained by modeling a press-forming die for press forming the press formed part 1. In the present embodiment, a press-forming die in which each of the upper die and/or the lower die is formed of an integrated part is targeted.

In the setting step S1, similarly to the above-described conventional procedure 1, a press-forming die model (mesh model) for finite element method (FEM) analysis is created from the part profile CAD data. Then, the press-forming die model is divided into a plurality of regions, and at least two or more evaluation regions are set. An example of the evaluation region to be set is illustrated in FIG. 4.

As illustrated in FIG. 4, in the present embodiment, 19 evaluation regions A to S are set for a press-forming die model 15 having a profile corresponding to the press formed part 1 in FIG. 2. The evaluation regions A to E and O to S correspond to both flange portions 9 of the press formed part 1. The evaluation region G corresponds to the first convex portion 11 of the press formed part 1, and the evaluation region M corresponds to the second convex portion 13 of the press formed part 1. Further, the evaluation region F corresponds to the first top portion 3 of the press formed part 1, and the evaluation region L corresponds to the plane of the second top portion 5 of the press formed part 1. And the evaluation regions H to K and N correspond to the inclined surfaces of the upper surface portion 10 and the second top portion 5 of the press formed part 1.

The reason why the flange portion 9 of the press formed part 1 is evaluated is that there is a concern that wrinkles may be generated in the flange portion 9. In the case of the press formed part 1 of FIG. 2, there is a concern that the flange portion 9 becomes shrink flange forming during forming, and the material may be locally concentrated to generate wrinkles. As described above, since a portion where wrinkles were generated during forming can also be a forming load increasing factor portion, the flange portion 9 was evaluated.

The side wall portion 7 of the press formed part 1 and the curved portion (shoulder R portion) connecting the side wall portion 7 and other portions (the flange portion 9, the first top portion 3, and the like) were excluded from the evaluation targets because it was difficult to add profiles, and there was little room for profile change even if the portion was a forming load increasing factor portion. As described above, the evaluation region is not necessarily set in the entire press-forming die model 15, and may be set in a portion where there is a concern of no conformity between the blank and the press-forming die, a portion where there is a concern about generation of wrinkles, a portion where there is room for profile correction, or the like.

### <Press Forming Analysis Step>

The press forming analysis step S3 is a step of performing finite element method (FEM) analysis on the press forming of the press formed part 1 using the press-forming die model 15 in which the evaluation region is set and calculating a forming load distribution (not illustrated) of the press-forming die model 15 at the forming bottom dead center.

### <Press-Forming Die Model Load Evaluation Value Calculation Step>

The press-forming die model load evaluation value calculation step (hereinafter, abbreviated as first calculation step) S5 is a step of calculating a load evaluation value for each of the evaluation regions A to S based on the forming load distribution calculated in the press forming analysis step S3. The load evaluation value is an index value for evaluating the load required for forming for each evaluation region. In the present embodiment, the load applied to each evaluation region, that is, the reaction force received by the press-forming die in each evaluation region is obtained as a value obtained by summing load data for each finite element mesh in the evaluation region, and used as a load evaluation value. The load evaluation value may be the maximum load of each evaluation region (the maximum value of the load data for each finite element mesh in the evaluation region) or the average load of each evaluation region (the value obtained by dividing the total value of the load data for each finite element mesh in the evaluation region by the area of the evaluation region).

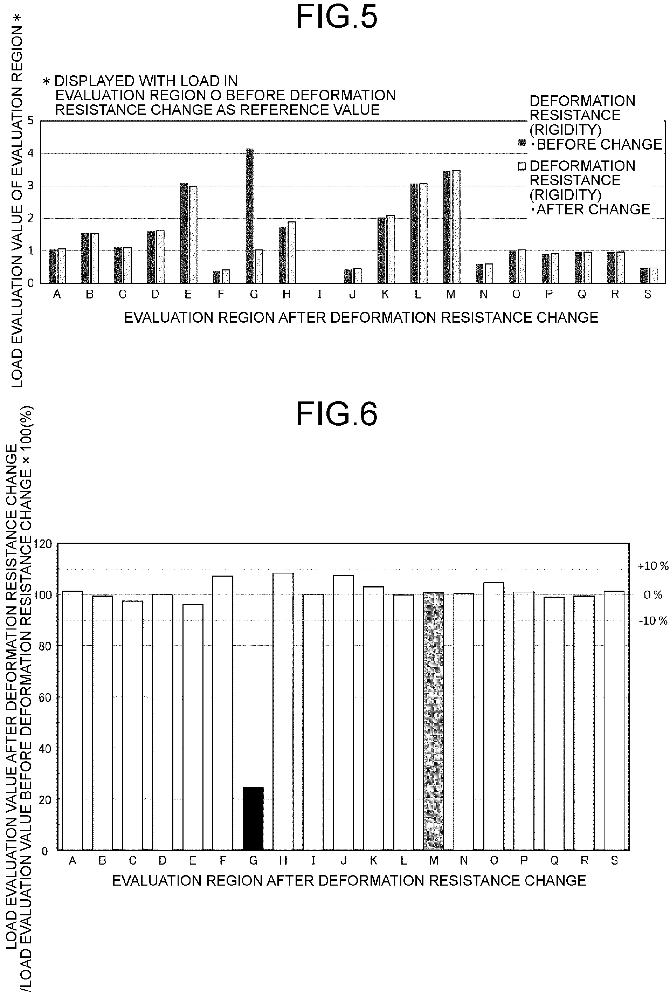

The load evaluation value of each evaluation region calculated in the first calculation step S5 is indicated by a black bar graph in FIG. 5. The numerical value of the load evaluation value displayed on the vertical axis in FIG. 5 is normalized with the load in the evaluation region O as a reference value.

### <Deformation Resistance Changed Press-Forming Die Model Load Evaluation Value Calculation Step>

The deformation resistance changed press-forming die model load evaluation value calculation step (hereinafter, abbreviated as second calculation step) S7 is a step of changing the deformation resistance of the press-forming die model 15 only in one of the evaluation regions A to S and performing finite element method (FEM) analysis to calculate the load evaluation value of the evaluation region in which the deformation resistance of the press-forming die model 15 is changed. Hereinafter, a case where the deformation resistance of the press-forming die model 15 in the evaluation region A is changed will be specifically described as an example.

First, with respect to the press-forming die model 15 used in the first calculation step S5, the setting condition is changed so that the deformation resistance of the press-forming die model 15 is low or high only at the portion where the evaluation region A is set. For example, in a case where the deformation resistance of the press-forming die model 15 is lowered, it is preferable to change setting conditions such as relaxing the displacement restraint, reducing Young's modulus, reducing the sheet thickness, reducing the density, reducing the mass, and lowering the yield strength. Also, only one of the setting conditions above may be changed, or two or more of the setting conditions may be changed in combination. In the present embodiment, in order to lower the deformation resistance in the evaluation region A of the press-forming die model 15, Young's modulus of the portion where the evaluation region A of the press-forming die model 15 is set is set to 0.05% (substantially 0) of the initially set value.

Next, the press forming of the press formed part 1 is analyzed by the finite element method (FEM) using the press-forming die model in which the deformation resistance in the evaluation region A of the press-forming die model 15 is lowered as described above (hereinafter referred to as a deformation resistance changed press-forming die model 17), and the forming load distribution at the forming bottom dead center is calculated. Then, a load evaluation value in the evaluation region A (here, a load (reaction force received by the press-forming die in the evaluation region A)) is calculated based on the calculated forming load distribution of the deformation resistance changed press-forming die model 17.

The same process as described above is performed for the evaluation regions B to S, and the load evaluation value after the deformation resistance is changed in each evaluation region of the press-forming die model 15 is calculated. The load evaluation value of each evaluation region calculated in the second calculation step S7 is indicated by a white bar graph in FIG. 5.

### <Forming Load Increasing Factor Portion Identification Step>

The forming load increasing factor portion identification step (hereinafter, abbreviated as identification step) S9 is a step of identifying a portion of the press formed part 1 that causes an increase in the forming load based on the load evaluation value calculated in the first calculation step S5 and the load evaluation value calculated in the second calculation step S7.

In FIG. 5, as described above, the load evaluation value calculated in the first calculation step S5 is displayed as a black bar graph, the load evaluation value calculated in the second calculation step S7 is displayed as a white bar graph, and the load evaluation values before and after the deformation resistance change are compared and shown for each evaluation region of the press-forming die model 15.

As illustrated in FIG. 5, before the deformation resistance was changed (black bar graph), the load evaluation value in the evaluation region G corresponding to the first convex portion 11 of the press formed part 1 was the largest, and the load evaluation value in the evaluation region M corresponding to the second convex portion 13 of the press formed part 1 was the second largest. As described above, before the deformation resistance is changed, it can be seen that a large load is generated at the first convex portion 11 and the second convex portion 13 where no conformity to the die is likely to occur during forming.

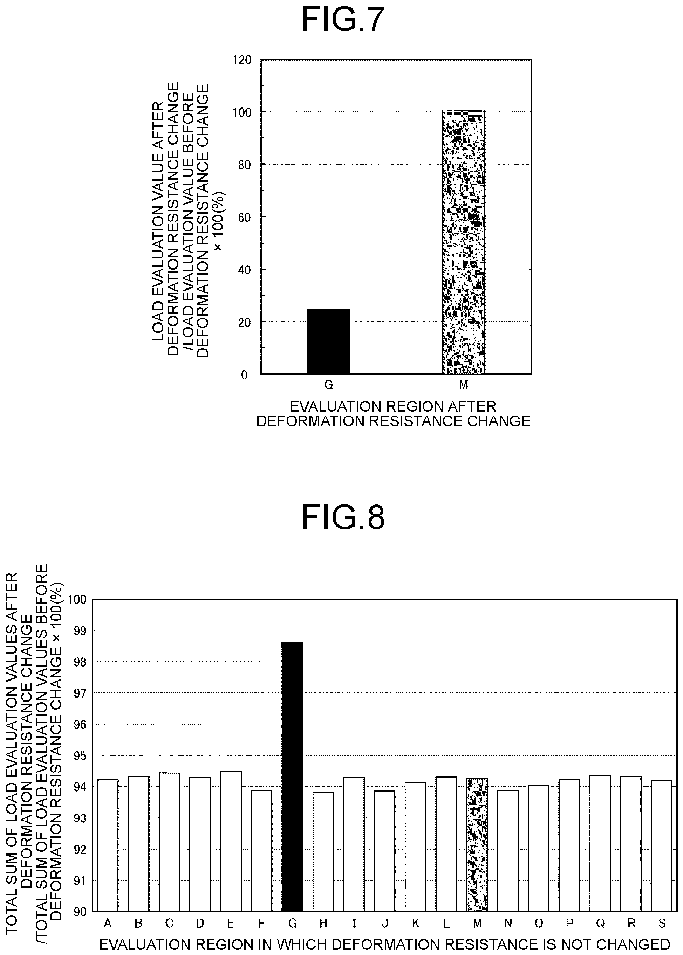

Next, a change in the load evaluation value before and after changing the deformation resistance in each evaluation region of the press-forming die model 15 is illustrated in percentage in FIG. 6. Further, a graph of the evaluation region G and the evaluation region M is extracted from FIG. 6 and compared, and the result is illustrated in FIG. 7. The vertical axis in FIGS. 6 and 7 represents a value obtained by calculating the change in the load evaluation value from the expression of the load evaluation value after deformation resistance change of the press-forming die model/load evaluation value before deformation resistance change of the press-forming die model × 100, and indicates that the change is smaller as the value is closer to 100% and the change is larger as the value is farther from 100%.

As illustrated in FIGS. 6 and 7, the change in the load evaluation value before and after the deformation resistance change was within ±10% in most of the evaluation regions, whereas the load evaluation value decreased by about 75% in the evaluation region G corresponding to the first convex portion 11 of the press formed part 1.

As described in the background leading to the present invention, in a portion where the blank does not comfort to the press-forming die during forming, ease of deformation of the press-forming die (that is, deformation resistance of the press-forming die model) affects the forming load. Therefore, it can be determined that the portion where the load evaluation value greatly changes before and after the change in deformation resistance of the press-forming die model is a portion where no conformity to the die occurs during forming, that is, a portion that causes an increase in the forming load (forming load increasing factor portion). Therefore, in the identification step S9 of the present embodiment, the portion of the press formed part 1 corresponding to the evaluation region G, that is, the first convex portion 11 can be identified as the forming load increasing factor portion.

The reason why the first convex portion 11 of the two convex profile portions of the press formed part 1 is a forming load increasing factor portion has been studied and will be described below. As described with reference to FIG. 3, the first convex portion 11 and the second convex portion 13 have substantially the same protrusion height. However, the bulging properties of the convex profile portion are not necessarily the same even if the protrusion height is the same, and are greatly affected by the metal flow from the peripheral portion of the convex profile portion. Specifically, if the material easily flows into the convex profile portion from the peripheral portion, the blank is easily deformed at the time of forming the convex profile portion, and easily conforms to the press-forming die.

In the case of the first convex portion 11 and the second convex portion 13 of the press formed part 1, as illustrated in FIG. 3, the distance (a₁, a₂) from the second convex portion 13 to the outer peripheral portion of the second top portion 5 is longer than the distance (b₁, b₂) from the first convex portion 11 to the outer peripheral portion of the first top portion 3. Therefore, the material of the second top portion 5 in the vicinity of the second convex portion 13 easily flows into the second convex portion 13 side, and the blank easily conforms to the press-forming die at the time of forming. On the other hand, since the positions of the first convex portion 11 and the outer peripheral portion of the first top portion 3 are close to each other, the metal of the first top portion 3 in the vicinity of the first convex portion 11 easily flows to the side wall portion 7 side, the metal flow to the first convex portion 11 side is reduced, and the press-forming die conformity of the blank is deteriorated. From the above description as well, it can be said that the first convex portion 11 is a portion where no conformity to the die during forming easily occurs as compared with the second convex portion 13.

As described above, in the present embodiment, the forming load increasing factor portion can be identified by a simple method of changing the setting condition regarding the deformation resistance of the press-forming die model. Since it is not necessary to correct the part profile CAD data or to correct the profile of the press-forming die model used for the finite element method (FEM) analysis as in the related art, and it is possible to identify a portion of not conforming to the die or a portion of concern for wrinkle generation, it is possible to greatly shorten the time required for examining the part profile, which is efficient.

In the above-described embodiment, the deformation resistance of the press-forming die model in one evaluation region is changed, and it is determined whether or not the portion of the press formed part corresponding to the region is the forming load increasing factor portion based on the change in the load evaluation value before and after the change in the deformation resistance of the press-forming die model in the region. On the other hand, for example, in the press-forming die model, the deformation resistance of the other evaluation region except for one evaluation region may be changed, and the forming load increasing factor portion may be identified from the change in the load evaluation value before and after the deformation resistance change in the entire press-forming die model. An example as described above is illustrated in FIG. 8**.**

FIG. 8 corresponds to the graph of FIG. 6 described above, and illustrates a change in the load evaluation value in the entire press-forming die model 15 before and after the deformation resistance is changed. In the case of the present example, since the deformation resistance is not changed only in one evaluation region in the press-forming die model 15, the evaluation region of the press-forming die model 15 in which the deformation resistance is not changed is displayed on the horizontal axis. In addition, the vertical axis represents a change in the total sum of the load evaluation values (load sum) in the entire press-forming die model 15, and is a value calculated from the expression of total sum of loads of entire press-forming die model after deformation resistance change/total sum of loads of entire press-forming die model before deformation resistance change × 100. Similarly to FIG. 6**,** it is indicated that the change in the load sum is smaller as the distance is closer to 100%, and the change in the load sum is larger as the distance is farther from 100%.

As illustrated in FIG. 8**,** when the deformation resistance was not changed only in the evaluation region G in the press-forming die model 15, the change in the load sum before and after the deformation resistance change was small as compared with the examples of other evaluation regions. From the results of FIG. 8, it can be seen that the load is easily reduced when the deformation resistance of the evaluation region G in the press-forming die model 15 is changed, and the load is hardly reduced when the deformation resistance of the evaluation region G is not changed. Therefore, also in this case, the first convex portion 11, which is a portion of the press formed part 1 corresponding to the evaluation region G in the press-forming die model 15, can be identified as a forming load increasing factor portion.

### [Second Embodiment]

A method for manufacturing the press formed part 1 targeted in the first embodiment will be described. In the method for manufacturing the press formed part 1 of the present embodiment, the portion of the press formed part 1 that causes the increase in the forming load is identified using the forming load increasing factor portion identifying method of the first embodiment, and the part profile of the portion is corrected to reduce the load required for the press forming.

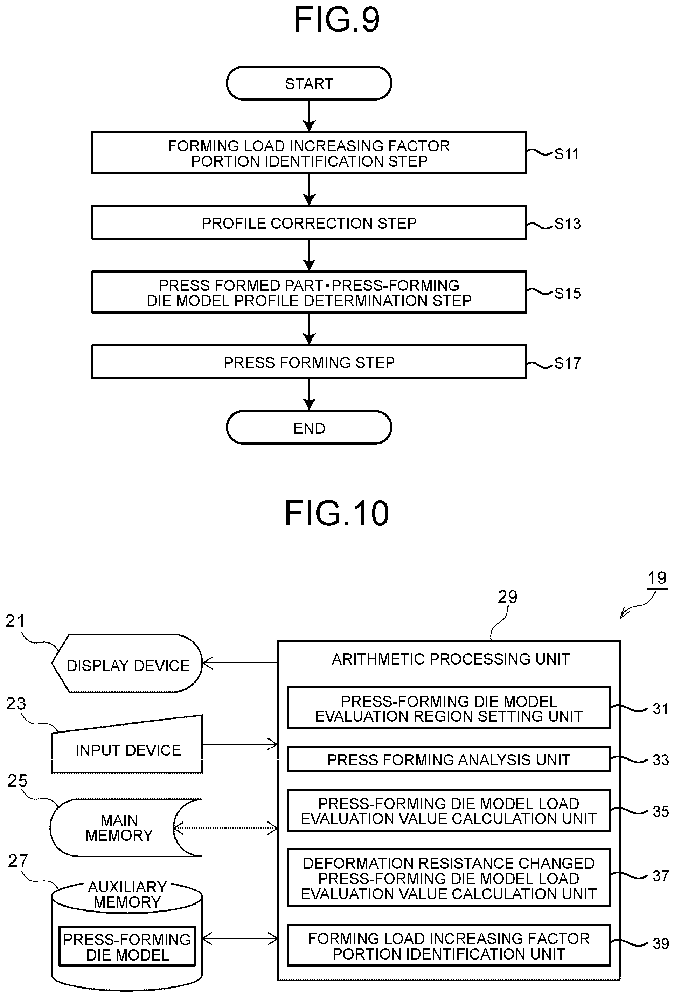

As illustrated in FIG. 9**,** the method for manufacturing the press formed part 1 of the present embodiment includes a forming load increasing factor portion identification step S11, a profile correction step S13, a press formed part/press-forming die model profile determination step S15, and a press forming step S17. Hereinafter, each step will be specifically described.

### <Forming Load Increasing Factor Portion Identification Step>

The forming load increasing factor portion identification step (hereinafter, abbreviated as identification step) S11 is a step of identifying a portion of the press formed part 1 that causes an increase in the forming load using the forming load increasing factor portion identifying method described in the first embodiment. The setting step S1 to the identification step S9 described in the first embodiment correspond to the identification step S11 in the second embodiment.

In the case of the press formed part 1 of FIG. 2**,** as described in the first embodiment, the first convex portion 11 can be identified as a portion that causes an increase in forming load.

### <Profile Correction Step>

The profile correction step S13 is a step of correcting the profile of the press formed part 1 at the portion identified in the identification step S11 and the profile of the evaluation region of the corresponding press-forming die model. As described above, since the first convex portion 11 of the press formed part 1 is identified as the forming load increasing factor portion, the part profile of the portion including the first convex portion 11 is first corrected.

In the present example, it is presumed that the cause of increasing the forming load is that the blank does not conform to the shoulder part of a punch and the shoulder part of a die in the portion where the first convex portion 11 is formed. Therefore, the profile of the part is corrected so as to improve conformity to the press-forming die during forming of the portion.

As the correction of the part profile, for example, the protrusion height of the first convex portion 11 may be lowered. By reducing the protrusion height of the convex profile portion and reducing the height difference from the punch bottom (first top portion 3), the profile difference from the flat portion is reduced, and an effect of reducing no conformity between the blank and the press-forming die during forming can be expected.

(Profile Correction Example 1) Since the initial protrusion height of the first convex portion was 3 mm, this is changed to 2 mm or 1.5 mm.

In addition, for example, the shoulder radius of the shoulder R portion of the punch (see the white arrow in the enlarged view of FIG. 3) and the shoulder R portion of the die (see the black arrow in the enlarged view of FIG. 3) of the first convex portion 11 may be increased. By enlarging the shoulder radius of the convex profile portion, it is possible to expect an effect of making the profile change gentle and reducing no conformity between the press-forming die and the blank during forming.

(Profile Correction Example 2) Since the initial shoulder radius of the shoulder R portion of the punch and the shoulder R portion of the die of the first convex portion 11 was 7 mm, this is changed to 10 mm or 15 mm.

After the profile of the first convex portion 11 of the press formed part 1 is corrected, the profile of the corresponding press-forming die model is similarly corrected.

### <Press Formed Part/Press-Forming Die Model Profile Determination Step>

The press formed part/press-forming die model profile determination step (hereinafter, abbreviated as determination step) S15 is a step of checking the effect of the profile correction in the profile correction step S13 and determining the profile of the press formed part 1 and the profile of the corresponding press-forming die model.

First, in order to check the correction effect of the part profile, analysis similar to that in the identification step S11 is performed using the press-forming die model whose profile has been corrected in the profile correction step S13 (hereinafter, referred to as a post-profile-correction press-forming die model). Specifically, an evaluation region similar to that in FIG. 4 is set for the post-profile-correction press-forming die model (setting step S1).

Next, the press forming of the press formed part 1 in FIG. 2 is analyzed by the finite element method (FEM) using the post-profile-correction press-forming die model in which the evaluation region is set, and the load evaluation value of the evaluation region G before the deformation resistance is changed is calculated (press forming analysis step S3, first calculation step S5).

Next, the deformation resistance of the portion corresponding to the evaluation region G of the post-profile-correction press-forming die model is changed, the finite element method (FEM) analysis is performed again using the press-forming die model, and the load evaluation value of the evaluation region G after the change in the deformation resistance is calculated (second calculation step S7).

Then, a change in the load evaluation value before and after the deformation resistance change in the evaluation region G in the post-profile-correction press-forming die model is checked. When the change in the load evaluation value before and after the deformation resistance change becomes small and falls within a predetermined range, it can be determined that the forming load is reduced by the correction of the part profile performed in the profile correction step S13. Therefore, the profile of the press formed part 1 and the profile of the post-profile-correction press-forming die model are determined based on the profile of the press formed part and the profile of the post-profile-correction press-forming die model corrected in the profile correction step S13.

The above-described predetermined range may be defined by a difference between the load evaluation values before and after the deformation resistance is changed, or may be defined by a change rate of the load evaluation value before and after the deformation resistance is changed.

When the change in the load evaluation value before and after the deformation resistance change is large even if the profile of the press-forming die model is corrected, it is determined that the effect of the profile correction is low, and the profile correction step S13 and the identification step S11 are performed again. As described above, the profile correction step S13 and the identification step S11 are repeated until the effect of the profile correction can be achieved, and the profile of the press formed part 1 and the profile of the press-forming die model are determined.

### <Press Forming Step>

The press forming step S17 is a step of producing a press-forming die based on the profile of the press-forming die model determined in the determination step S15 and performing press forming of the press formed part 1 using the produced press-forming die. Examples of the press-forming die include a die made of casting and a die made of steel material. In the case of a die made of casting, a full mold casting method (evaporative pattern casting method) is used in which a casting die model is produced from a material that disappears at a high temperature, such as expanded polystyrene by NC machining using a numerically-controlled machine (NC machine). In addition, in the case of a press-forming die made of a steel material, it is necessary to machine (cutting, grinding, polishing) the steel material by NC machining. The process of producing the press-forming die based on the profile of the press-forming die model determined in the determination step S15 includes an NC data acquisition process and an NC machining process. The NC data acquisition process is a process of acquiring NC data for NC machining based on the profile of the press-forming die model determined in the determination step S15. Data on the profile of the press-forming die model is input to a CAD/CAM program in cooperation with the NC machine, and converted into numerical control data (NC data) for NC machining (numerical control program (NC program)). The NC machine machines a casting die model made of expanded polystyrene or a press-forming die made of steel material. The NC machining process is a process of actually manufacturing a casting die model made of expanded polystyrene or a press-forming die made of steel material by an NC machine using the NC data (NC program) acquired in the NC data acquisition process.

As described above, in the present embodiment, the portion of the press formed part 1 that causes an increase in forming load can be easily identified, and the effect of profile correction on the portion can also be easily checked, so that the time until the profiles of the press formed part 1 and the press-forming die are determined can be greatly shortened. In addition, since the forming load can be efficiently reduced, it is also suitable for press forming of a high-tensile steel sheet.

### [Third Embodiment]

The forming load increasing factor portion identifying method described in the first embodiment can be achieved by causing a PC (personal computer) to execute a preset program. An example of such a device will be described in the present embodiment. A forming load increasing factor portion identifying device 19 according to the present embodiment includes a display device 21, an input device 23, a main memory 25, an auxiliary memory 27, and an arithmetic processing unit 29 as illustrated in an example in FIG. 10. The display device 21, the input device 23, the main memory 25, and the auxiliary memory 27 are connected to the arithmetic processing unit 29, and perform each function according to a command of the arithmetic processing unit 29.

The display device 21 is used for displaying an execution result or the like, and is configured of a liquid crystal monitor (LCD monitor) or the like. The input device 23 is used for input from an operator or the like, and is configured of a keyboard, a mouse, and the like. The main memory 25 is configured of a random access memory (RAM) or the like used for temporary storage, calculation, and the like of data used by the arithmetic processing unit 29. The auxiliary memory 27 is used for storing data and the like, and is configured of a hard disk or the like. The auxiliary memory 27 stores at least various data necessary for finite element method (FEM) analysis such as a press-forming die model.

The arithmetic processing unit 29 is configured of a central processing unit (CPU) of a personal computer (PC), and the like, and a press-forming die model evaluation region setting unit (hereinafter, abbreviated as setting unit) 31, a press forming analysis unit 33, a press-forming die model load evaluation value calculation unit (hereinafter, abbreviated as a first calculation unit) 35, a deformation resistance changed press-forming die model load evaluation value calculation unit (hereinafter, abbreviated as a second calculation unit) 37, and a forming load increasing factor portion identification unit (hereinafter, abbreviated as an identification unit) 39 are achieved by executing a program set in advance in the arithmetic processing unit 29.

The setting unit 31 performs processing similar to the setting step S1 described in the first embodiment. Similarly, the press forming analysis unit 33 performs the press forming analysis step S3, the first calculation unit 35 performs the first calculation step S5, the second calculation unit 37 performs the second calculation step S7, and the identification unit 39 performs the identification step S9.

As described above, according to the present embodiment, the forming load increasing factor portion can be identified by a simple method as in the first embodiment. Therefore, if the part profile is corrected on the basis of the identified portion, it is possible to efficiently take measures for reducing the forming load.

As described above, the setting unit 31, the press forming analysis unit 33, the first calculation unit 35, the second calculation unit 37, and the identification unit 39 in the forming load increasing factor portion identifying device 19 of the present embodiment are implemented by the CPU executing a predetermined program. Therefore, the forming load increasing factor portion identifying program according to the present invention can specify that the computer functions as the setting unit, the press forming analysis unit, the first calculation unit, the second calculation unit, and the identification unit.

### Industrial Applicability

According to the present invention, it is possible to provide a forming load increasing factor portion identifying method, device, and program capable of easily identifying a portion of a press formed part that causes an increase in forming load. Also, according to the present invention, it is possible to provide a method for manufacturing a press formed part capable of manufacturing a press formed part by reducing a forming load by using the method for identifying a portion causing an increase in forming load.

### Reference Signs List

1 PRESS FORMED PART
3 FIRST TOP PORTION
5 SECOND TOP PORTION
7 SIDE WALL PORTION
9 FLANGE PORTION
10 UPPER SURFACE PORTION
11 FIRST CONVEX PORTION
13 SECOND CONVEX PORTION
15 PRESS-FORMING DIE MODEL
17 DEFORMATION RESISTANCE CHANGED PRESS-FORMING DIE MODEL
19 FORMING LOAD INCREASING FACTOR PORTION IDENTIFYING DEVICE
21 DISPLAY DEVICE
23 INPUT DEVICE
25 MAIN MEMORY
27 AUXILIARY MEMORY
29 ARITHMETIC PROCESSING UNIT
31 PRESS-FORMING DIE MODEL EVALUATION REGION SETTING UNIT (SETTING UNIT)
33 PRESS FORMING ANALYSIS UNIT
35 PRESS-FORMING DIE MODEL LOAD EVALUATION VALUE CALCULATION UNIT (FIRST CALCULATION UNIT)
37 DEFORMATION RESISTANCE CHANGED PRESS-FORMING DIE MODEL LOAD EVALUATION VALUE CALCULATION UNIT (SECOND CALCULATION UNIT)
39 FORMING LOAD INCREASING FACTOR PORTION IDENTIFICATION UNIT (IDENTIFICATION UNIT)

## Claims

1. A forming load increasing factor portion identifying method for identifying a portion of a press formed part which causes an increase in forming load by executing each step by a computer, the method comprising:
a setting step of setting at least two or more evaluation regions in a press-forming die model in which an upper die and/or a lower die is formed of an integrated part and a die for press-forming the press formed part is modeled;
a press forming analysis step of performing finite-element analysis of press forming of the press formed part using the press-forming die model and calculating a forming load distribution of the press-forming die model at a forming bottom dead center;
a first calculation step of calculating a load evaluation value for each evaluation region of the press-forming die model based on the forming load distribution calculated in the press forming analysis step;
a second calculation step of performing the finite-element analysis of press forming of the press formed part using a deformation resistance changed press-forming die model in which a deformation resistance in one evaluation region among the evaluation regions of the press-forming die model is changed to be low or high, calculating a forming load distribution of the deformation resistance changed press-forming die model at the forming bottom dead center, and calculating a load evaluation value of the evaluation region in which the deformation resistance is changed based on the forming load distribution; and
an identification step of identifying the evaluation region in which the load evaluation value changes before and after the deformation resistance of the press-forming die model is changed based on the load evaluation value calculated in the first calculation step and the load evaluation value calculated in the second calculation step, and identifying a portion of the press formed part corresponding to the identified evaluation region as a portion of the press formed part that causes an increase in forming load.

2. The forming load increasing factor portion identifying method according to claim **1,** wherein the deformation resistance of the press-forming die model changed in the second calculation step is any one of displacement restraint, Young's modulus, sheet thickness, density, mass, and yield strength, or a combination of two or more selected from these.

3. The forming load increasing factor portion identifying method according to claim **1,** wherein the load evaluation value for each evaluation region of the press-forming die model is a load, a maximum load, or an average load for each evaluation region.

4. A method for manufacturing a press formed part, the method comprising:
an identification step of identifying a portion of the press formed part that causes an increase in forming load using the forming load increasing factor portion identifying method according to any one of claims 1 to 3**;**
a profile correction step of correcting a profile of the press formed part of the identified portion and a profile of the corresponding press-forming die model;
a determination step of repeating the identification step and the profile correction step until a change in a load evaluation value before and after a change in deformation resistance of a press-forming die model in an evaluation region of the press-forming die model falls within a predetermined range, and determining a profile of the press formed part and a profile of a corresponding press-forming die model; and
a press forming step of producing a press-forming die based on the determined profile of the press-forming die model, and performing press forming of the press formed part using the produced press-forming die.

5. A forming load increasing factor portion identifying device for identifying a portion of a press formed part which causes an increase in forming load, the device comprising:
a setting unit configured to set at least two or more evaluation regions in a press-forming die model in which an upper die and/or a lower die is formed of an integrated part and a die for press-forming the press formed part is modeled;
a press forming analysis unit configured to perform finite-element analysis of press forming of the press formed part using the press-forming die model and calculate a forming load distribution of the press-forming die model at the forming bottom dead center;
a first calculation unit configured to calculate a load evaluation value for each evaluation region of the press-forming die model based on the forming load distribution calculated in the press forming analysis unit;
a second calculation unit configured to perform the finite-element analysis of press forming of the press formed part using a deformation resistance changed press-forming die model in which a deformation resistance in one evaluation region among the evaluation regions of the press-forming die model is changed to be low or high, calculate a forming load distribution of the deformation resistance changed press-forming die model at the forming bottom dead center, and calculate a load evaluation value of the evaluation region in which the deformation resistance is changed based on the forming load distribution; and
an identification unit configured to identify the evaluation region in which the load evaluation value changes before and after the deformation resistance of the press-forming die model is changed based on the load evaluation value calculated in the first calculation unit and the load evaluation value calculated in the second calculation unit, and identify a portion of the press formed part corresponding to the identified evaluation region as a portion of the press formed part that causes an increase in forming load.

6. A forming load increasing factor portion identifying program causing a computer to function as the forming load increasing factor portion identifying device according to claim 5.
